# EUROPEAN PATENT SPECIFICATION

(11) **EP 3 923 515 B1**
(45) Date of publication and mention of the grant of the patent: **18.06.2025**
(21) Application number: 19914376.9
(22) Date of filing: 06.02.2019
(51) Int. Cl.: H04L 9/36, H04L 9/08, H04L 9/32, H04L 9/40, G06F 21/60, H04L 67/104, H04L 67/561, H04L 67/563

(54) **DATA TRANSMISSION METHOD, COMMUNICATION PROCESSING METHOD, DEVICE, AND COMMUNICATION PROCESSING PROGRAM**
VERFAHREN ZUR DATENÜBERTRAGUNG, KOMMUNIKATIONSVERARBEITUNGSVERFAHREN, VORRICHTUNG UND KOMMUNIKATIONSVERARBEITUNGSPROGRAMM
PROCÉDÉ DE TRANSMISSION DE DONNÉES, PROCÉDÉ DE TRAITEMENT DE COMMUNICATION, DISPOSITIF, ET PROGRAMME DE TRAITEMENT DE COMMUNICATION

(43) Date of publication of application: 15.12.2021
(73) Proprietor: CONNECTFREE CORPORATION, Kyoto-shi, Kyoto 600-8009 (JP)
(72) Inventor: TATE, Kristopher Andrew, Kyoto-shi, Kyoto 600-8009 (JP)
(74) Representative: Boult Wade Tennant LLP
(86) International application number: PCT/JP2019/004291
(87) International publication number: WO 2020/161842

(56) References cited:
- JP-A- 2002 044 135
- JP-A- 2007 318 217
- JP-A- 2012 516 654
- US-A1- 2003 014 623
- US-A1- 2008 133 758
- US-A1- 2012 179 829
- US-A1- 2012 311 329
- US-A1- 2016 099 890
- US-A1- 2016 149 908
- US-A1- 2018 241 739

## Description

### TECHNICAL FIELD

The present disclosure relates to data communication technology between devices having authenticated IP addresses.

### BACKGROUND ART

The development of information and communication technology (ICT) has been remarkable in recent years, and devices connected to a network such as the Internet are not limited to conventional information processing devices, such as personal computers or smartphones, and are spreading to various things. Such a technology trend is called "IoT (Internet of Things)", and various technologies and services have been proposed and put into practical use. In the future, a world is envisioned in which billions of people on Earth and tens of billions or trillions of devices are connected at the same time. In order to realize such a networked world, it is necessary to provide a solution that is simpler, safer, and more freely connected.

Usually, on a network, data communication between devices is realized by using an IP (Internet Protocol) address statically or dynamically assigned to each device. For example, JP 2018-207472 A (Patent Document 1) discloses a network system using a new concept of authentication of a network address itself. According to this network system, it is possible to realize secure communication between devices by using an authenticated IP address.

### CITATION LIST

### PATENT DOCUMENT

Patent Document 1: JP 2018-207472 A
US-2012/311329A1 describes a system and method for secure instant messaging.
US-2003/014623A1 describes a secure sockets layer cut through architecture.
US-2018/241739A1 describes a controller, communication method, and communication system.

### SUMMARY OF THE INVENTION

### PROBLEM TO BE SOLVED BY THE INVENTION

According to the above Patent Document 1, assuming that the concept of realizing secure communication using such an authenticated IP address is applied to an existing network, the device should not only communicate with a device having an authenticated IP address but also communicate with a device having only a normal IP address (that is, the assigned IP address is not authenticated).

The present disclosure provides one solution in a network including a device whose destination device cannot exchange encrypted packets.

### MEANS FOR SOLVING PROBLEM

According to an aspect of the present disclosure, a communication processing method in a device connected to a network is provided, in accordance with claim 1. The communication processing method includes: a step of determining whether or not a destination device is able to exchange encrypted packets in response to a packet transmission request; a step of generating a first encrypted packet directed to the destination device according to the packet transmission request if the destination device is able to exchange encrypted packets; a step of transmitting the first encrypted packet to the destination device by P2P; a step of generating a second encrypted packet including a packet directed to the destination device according to the packet transmission request if the destination device is not able to exchange encrypted packets; and a step of transmitting the second encrypted packet to a device serving as a proxy server by P2P.

The communication processing method may further include: a step of specifying a device to be the proxy server; and a step of transmitting a request for enabling a proxy operation to the specified device.

The communication processing method may further include: a step of acquiring a private key and a public key; a step of determining an IP address of the device itself based on a hash value calculated from the public key according to a hash function; a step of acquiring a digital certificate associated with the public key from a certificate authority connected to a network; and a step of transmitting the public key and the digital certificate to another device.

The communication processing method may further include: a step in which, when the public key and a digital certificate associated with the public key are received from another device, validity of the digital certificate is determined; and a step in which, when it is determined that the digital certificate is valid, an IP address of the another device is determined based on a hash value calculated from the public key according to a hash function.

A device according to still another embodiment of the present disclosure includes: a network interface for connecting to a network; and a control unit connected to the network interface. The control unit is configured to be able to execute: processing for determining whether or not a destination device is able to exchange encrypted packets in response to a packet transmission request; processing for generating a first encrypted packet directed to the destination device according to the packet transmission request if the destination device is able to exchange encrypted packets; processing for transmitting the first encrypted packet to the destination device by P2P; processing for generating a second encrypted packet including a packet directed to the destination device according to the packet transmission request if the destination device is able to exchange encrypted packets; and processing for transmitting the second encrypted packet to a device serving as a proxy server by P2P.

According to still another embodiment of the present disclosure, a communication processing program for a computer having a network interface for connecting to a network is provided. When the communication processing program is executed by the computer, the communication processing program causes the computer to execute the communication processing method described above.

### EFFECT OF THE INVENTION

According to the present disclosure, even in a network including a device whose destination device cannot exchange encrypted packets, it is possible to maintain the secure level while maintaining processing affinity.

### BRIEF DESCRIPTION OF DRAWINGS

Fig. 1 is a schematic diagram showing an example of the overall configuration of a network system according to the present embodiment;
Fig. 2 is a schematic diagram showing a hardware configuration example of a device according to the present embodiment;
Fig. 3 is a schematic diagram showing a configuration example of a program and data of a device according to the present embodiment;
Fig. 4 is a diagram for describing an IP address authentication procedure in the network system according to the present embodiment;
Fig. 5 is a diagram showing an example of type identification information embedded in the IP address used in the network system according to the present embodiment;
Fig. 6 is a flowchart showing a processing procedure in which a device provides an authenticated IP address in the network system according to the present embodiment;
Fig. 7 is a diagram for describing a process relevant to IP address notification in the network system according to the present embodiment;
Fig. 8 is a diagram for describing a process relevant to IP address notification in the network system according to the present embodiment;
Fig. 9 is a sequence chart showing a processing procedure relevant to IP address notification in the network system according to the present embodiment;
Fig. 10 is a schematic diagram showing an example of the network configuration of the network system according to the present embodiment;
Fig. 11 is a sequence diagram showing a procedure of data communication between devices having authenticated IP addresses in the network system according to the present embodiment;
Fig. 12 is a sequence diagram showing a procedure of data communication between devices having authenticated IP addresses in the network system according to the present embodiment;
Fig. 13 is a flowchart showing a processing procedure in which the device according to the present embodiment exchanges packets; and
Fig. 14 is a flowchart showing a processing procedure in which a proxy server according to the present embodiment exchanges packets.

### MODE(S) FOR CARRYING OUT THE INVENTION

Hereinafter, an embodiment according to the present disclosure will be described in detail with reference to the diagrams. In addition, the same or corresponding portions in the diagrams are denoted by the same reference numerals, and the description thereof will not be repeated.

### <A. Overall configuration of network system 1>

First, the overall configuration of the network system 1 according to the present embodiment will be described.

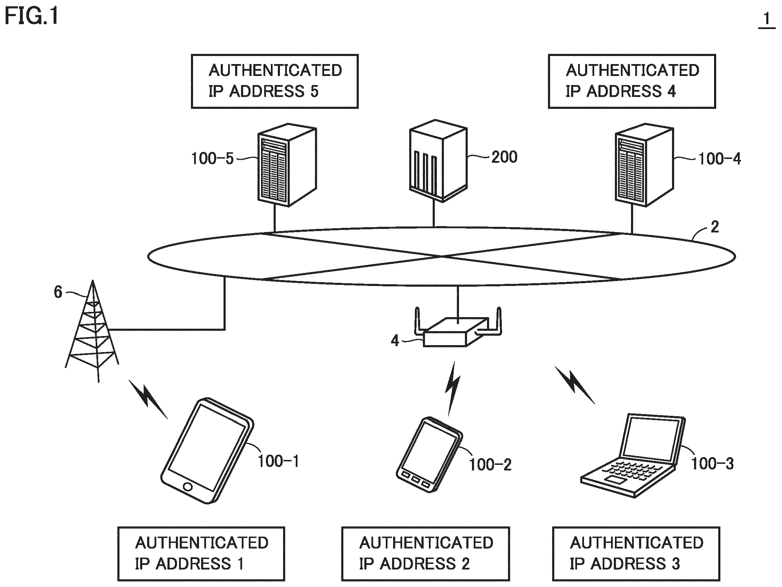

Fig. 1 is a schematic diagram showing an example of the overall configuration of the network system 1 according to the present embodiment. Referring to Fig. 1, it is assumed that a plurality of devices 100-1, 100-2, and 100-3, 100-4, 100-5, ... (hereinafter, may be referred to collectively as a "device 100") are connected to an arbitrary network 2 such as the Internet or an intranet. Some of the devices 100 may be connected to the network 2 through wireless communication established between the devices 100 and an access point 4. Alternatively, some other devices 100 may be connected to the network 2 through wireless communication established between the devices 100 and a mobile base station 6.

Thus, the network 2 may include any one of a local area network (LAN), a wide area network (WAN), a radio access network (RAN), and the Internet.

Each of the devices 100 connected to the network can be regarded as a "node" of the network, and in the following description, the device 100 may be referred to as a "node".

In the network system 1 according to the present embodiment, data communication is realized between the devices 100 according to a procedure described later. In addition, any physical connection method between the devices 100 may be used.

The device 100 includes any device having a function of performing data communication with other devices using the IP address of each device. The device 100 may be configured as a single communication device, may be configured as a part of any thing, or may be configured to be embedded in any thing.

More specifically, the device 100 may be, for example, a personal computer, a smartphone, a tablet, or a wearable device (for example, a smart watch or an AR glass) worn on the user's body (for example, an arm or a head). In addition, the device 100 may be a control device installed in a smart home appliance, a connected automobile, a factory, and the like or a part thereof.

The network system 1 according to the present embodiment further includes one or more certificate authorities 200. Each of the certificate authorities 200 is a computer configured by one or more servers. The IP address of each device 100 is authenticated according to a procedure, which will be described later, by using one or more certificate authorities 200. As a result, each device 100 has an authenticated IP address.

In this specification, the "authenticated IP address" means a state in which the validity of the IP address held by each device 100 is guaranteed for the communication destination or a third party. More specifically, the "authenticated IP address" means an IP address that is generated by an irreversible cryptographic hash function and is directly or indirectly authenticated by the certificate authority (details thereof will be described later). By using such an "authenticated IP address", it can be guaranteed that the IP address used by each device 100 for data communication is not spoofed.

As a result, any device 100 included in the network system 1 is uniquely identified based on the IP address of each device 100. That is, each device can determine a device to be a destination or a transmission destination of data transmission based on the IP address of each device.

The IP address is assumed to be a global IP address that can also be used for data communication between the devices 100 connected to the Internet, but may be a private IP address that is used only in a specific network.

The number of bits that make up an IP address differs depending on the version. In the currently established IPv4 (Internet Protocol Version 4), a 32-bit address section is defined, and in the currently established IPv6 (Internet Protocol Version 6), a 128-bit address section is defined. In the present embodiment, an IP address according to IPv6 will be mainly described. However, the present disclosure can also be applied to a network address specified by a larger number of bits or a network address specified by a smaller number of bits.

### <B. Configuration example of device 100>

Next, a configuration example of the hardware and software of the device 100 used in the network system 1 according to the present embodiment will be described.

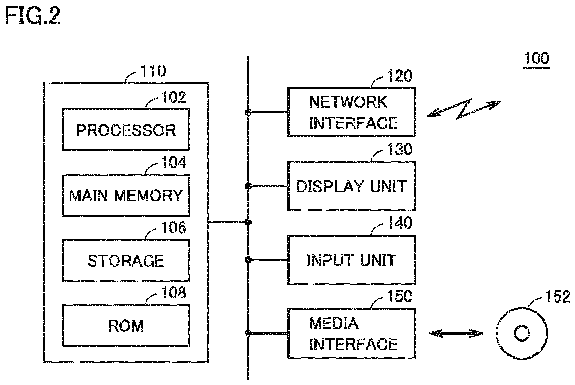

Fig. 2 is a schematic diagram showing a hardware configuration example of the device 100 according to the present embodiment. Referring to Fig. 2, the device 100 includes a control unit 110, which is a processing circuitry, as a main component.

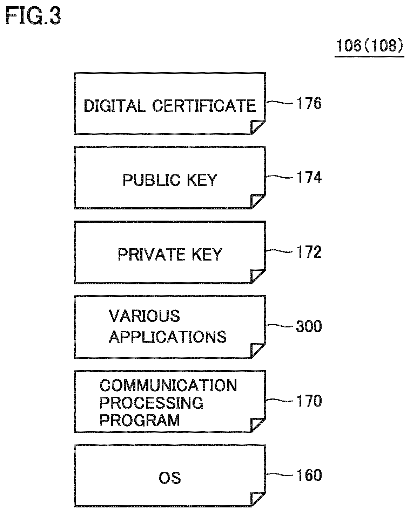

The control unit 110 is a calculation subject for providing functions and executing processes according to the present embodiment. The control unit 110 may be configured such that, by using a processor and a memory shown in Fig. 2, the processor executes computer-readable instructions (an OS (Operating System) and a communication processing program shown in Fig. 3) stored in the memory. Alternatively, the control unit 110 may be realized by using a hard-wired circuit such as an ASIC (Application Specific Integrated Circuit) in which a circuit corresponding to computer-readable instructions is provided. In addition, the control unit 110 may be realized by realizing a circuit corresponding to computer-readable instructions on an FPGA (field-programmable gate array). In addition, the control unit 110 may be realized by appropriately combining a processor, a memory, an ASIC, an FPGA, and the like.

In a configuration using the processor and the memory shown in Fig. 2, the control unit 110 includes a processor 102, a main memory 104, a storage 106, and a ROM (Read Only Memory) 108.

The processor 102 is an arithmetic circuit that sequentially reads and executes computer-readable instructions. The processor 102 includes, for example, a CPU (Central Processing Unit), an MPU (Micro Processing Unit), and a GPU (Graphics Processing Unit). The control unit 110 may be realized by using a plurality of processors 102 (multiprocessor configuration), or the control unit 110 may be realized by using a processor having a plurality of cores (multicore configuration).

The main memory 104 is a volatile storage device, such as a DRAM (Dynamic Random Access Memory) or a SRAM (Static Random Access Memory). The processor 102 loads a designated program, among various programs stored in the storage 106 or the ROM 108, into the main memory 104 and cooperates with the main memory 104 to realize various processes according to the present embodiment.

The storage 106 is, for example, a non-volatile storage device, such as an HDD (Hard Disk Drive), an SSD (Solid State Drive), or a flash memory. The storage 106 stores various programs executed by the processor 102 or various kinds of data described later.

The ROM 108 fixedly stores various programs executed by the processor 102 or various kinds of data described later.

In the configuration shown in Fig. 2 in which the processor 102 executes computer-readable instructions stored in the memory, the memory corresponds to the storage 106 and the ROM 108.

Here, an example of a program and data stored in the memory of the device 100 will be described.

Fig. 3 is a schematic diagram showing a configuration example of a program and data of the device 100 according to the present embodiment. Referring to Fig. 3, in the memory (the storage 106 and/or the ROM 108) of the device 100, for example, an OS 160, a communication processing program 170, and various applications 300 are stored as programs including computer-readable instructions.

The OS 160 is a program that provides basic functions for realizing the processing executed by the device 100. The communication processing program 170 is mainly a program for providing the functions and executing the processes according to the present embodiment. In addition, the communication processing program 170 may provide the functions and execute the processes according to the present embodiment by using a library or the like provided by the OS 160.

The various applications 300 are programs for realizing various functions provided by the device 100, and can be arbitrarily installed by the user. Typically, the various applications 300 provide various processes using a data communication function provided by the communication processing program 170.

In addition, in the memory (the storage 106 and/or the ROM 108) of the device 100, for example, a private key 172, a public key 174, and a digital certificate 176 are stored as data necessary for providing the functions and executing the processes according to the present embodiment. The private key 172 and the public key 174 are a so-called key pair generated according to an arbitrary encryption/decryption algorithm. The private key 172 is used for encrypted communication with other devices. The public key 174 is used to determine the IP address of each device 100 according to a procedure described later. The digital certificate 176 is issued to the public key 174 by the certificate authority 200, and is for ensuring the validity of the IP address of the device 100. Usually, the digital certificate 176 includes a hash value (digital signature) calculated from the public key 174 of each device 100 using the private key of the certificate authority 200. The device 100 that has received the digital certificate 176 checks the validity of the digital certificate 176 and the public key 174 associated with the digital certificate 176 by using the public key of the certificate authority 200.

The generation of a key pair (the private key 172 and the public key 174), the acquisition of the digital certificate 176, the procedure for using these pieces of data, and the like will be described later.

In addition, it is not necessary to provide both the storage 106 and the ROM 108, and only one of the storage 106 and the ROM 108 may be provided depending on the mounting type. In addition, when both the storage 106 and the ROM 108 are provided, for example, the key pair (the private key 172 and the public key 174) may be stored in the ROM 108 to enhance the confidentiality.

Referring back to Fig. 2, the device 100 further includes a network interface 120 for connecting the device 100 to the network. The network interface 120 performs data communication with other devices through the network.

Examples of the network interface 120 include wired connection terminals, such as serial ports including an Ethernet (registered trademark) port, a USB (Universal Serial Bus) port, and an IEEE1394 and a legacy parallel port. Alternatively, the network interface 120 may include processing circuitries and antennas for wireless communication with devices, routers, mobile base stations, and the like. The wireless communication supported by the network interface 120 may be any of Wi-Fi (registered trademark), Bluetooth (registered trademark), ZigBee (registered trademark), LPWA (Low Power Wide Area), GSM (registered trademark), W-CDMA, CDMA200, LTE (Long Term Evolution), and 5th generation mobile communication system (5G), for example.

The device 100 may include a display unit 130, an input unit 140, and a media interface 150 as optional components.

The display unit 130 is a component for presenting the processing result of the processor 102 to the outside. The display unit 130 may be, for example, an LCD (Liquid Crystal Display) or an organic EL (ElectroLuminescence) display. In addition, the display unit 130 may be a head-mounted display mounted on the user's head, or may be a projector that projects an image on the screen.

The input unit 140 is a component for receiving an input operation of a user who operates the device 100. The input unit 140 may be, for example, a keyboard, a mouse, a touch panel arranged on the display unit 130, or an operation button arranged in the housing of the device 100.

The media interface 150 reads various programs and/or various kinds of data from a non-transitory media 152 in which various programs (computer-readable instructions) and/or various kinds of data are stored.

The media 152 may be, for example, an optical medium, such as a DVD (Digital Versatile Disc), or a semiconductor medium, such as a USB memory. The media interface 150 adopts a configuration according to the type of the media 152. Various programs and/or various kinds of data read by the media interface 150 may be stored in the storage 106 or the like.

In addition, instead of installing various programs and/or various kinds of data on the device 100 through the media 152, necessary programs and data may be installed on the device 100 from a distribution server on the network. In this case, the necessary programs and data are acquired through the network interface 120.

As described above, since the display unit 130, the input unit 140, and the media interface 150 are optional components, the display unit 130, the input unit 140, and the media interface 150 may be connected from the outside of the device 100 through any interface such as a USB.

Providing the functions and executing the processes according to the present embodiment are realized by the control unit 110, and the technical scope of this application includes at least the hardware and/or the software for realizing the control unit 110. As described above, for the hardware, not only a configuration including a processor and a memory but also a configuration using a hard-wired circuit using an ASIC or the like or a configuration using an FPGA can be included. That is, the control unit 110 can be realized by installing a program on a general-purpose computer, or can be realized as a dedicated chip.

In addition, the software executed by the processor may include not only software distributed through the media 152 but also software appropriately downloaded through a distribution server.

In addition, the configuration for providing the functions and executing the processes according to the present embodiment is not limited to the control unit 110 shown in Fig. 2, and can be implemented by using any technology according to the time of the implementation.

### <C. Authenticated IP address>

Next, a process for providing an authenticated IP address to each device 100 and the like will be described.

### (c1: IP address determination process)

In the network system 1 according to the present embodiment, typically, the IP address of each device 100 is authenticated by using an authenticated IP address. As an example, the IP address of each device 100 may be authenticated by using a public key infrastructure (PKI).

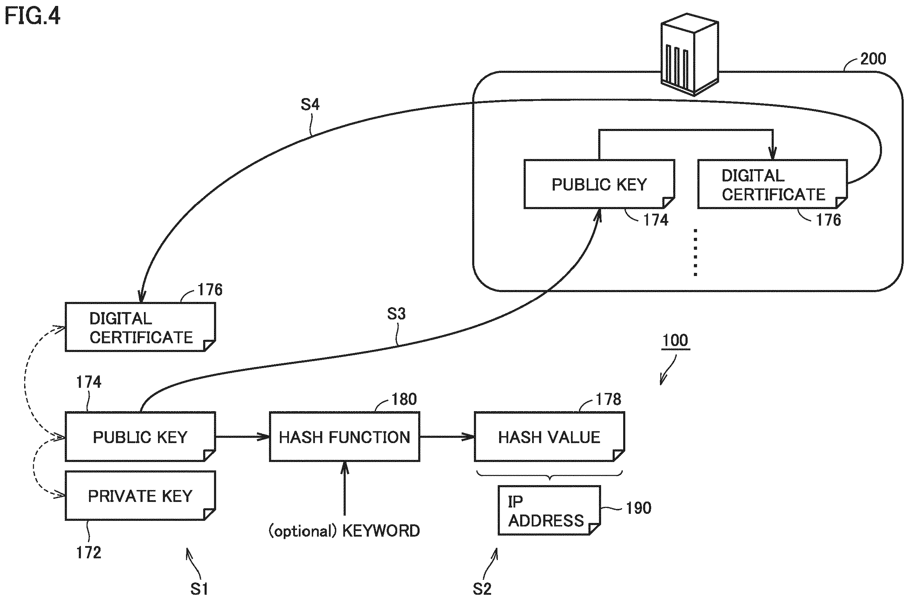

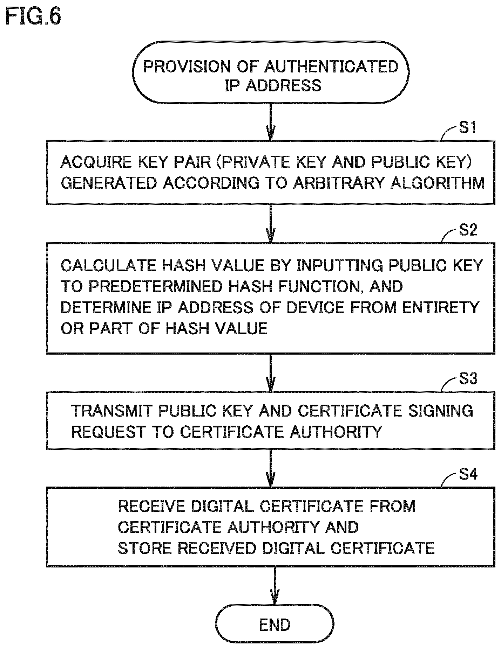

Fig. 4 is a diagram for describing an IP address authentication procedure in the network system 1 according to the present embodiment. In addition, reference numerals such as "S1" to "S4" in Fig. 4 correspond to step numbers shown in Fig. 6.

Referring to Fig. 4, the device 100 has a key pair of the private key 172 and the public key 174. A hash value 178 is calculated by inputting the public key 174 into a predetermined hash function 180, and the entirety or part of the calculated hash value 178 is used as an IP address 190 of the device 100.

According to such a process of determining the IP address 190, the device 100 transmits the public key 174 to the certificate authority 200, and associates the digital certificate 176 issued by the certificate authority 200 with the public key 174. The device 100 transmits the public key 174 and the digital certificate 176 of the device itself to another device. Another device checks the validity of the IP address 190 of the device 100 based on the public key 174 and the digital certificate 176 published by the device 100. When the validity of the IP address 190 is confirmed, data communication is started using the IP address 190 whose validity has been confirmed. The device itself and another device can communicate directly with each other, but in addition to the direct communication processing, inquiry processing at the certificate authority 200 may be included.

As described above, in the network system 1 according to the present embodiment, the IP address 190 itself can be authenticated. By holding such an authenticated IP address 190 in the device itself, it is possible to build an independent network without using a statically or dynamically assigned IP address for each device.

Hereinafter, the details of the process for providing the authenticated IP address in the network system 1 according to the present embodiment will be described.

The private key 172 and the public key 174, which are a key pair, may be generated by the device 100 itself, or may be provided from the outside and stored in the device 100 in advance. When the private key 172 and the public key 174 are provided from the outside, the device 100 may acquire only the private key 172 and generate the public key 174 by itself.

As an example of a method of generating the private key 172 and the public key 174 which are a key pair, a bit string of a predetermined length (for example, 512 bits) generated by a random number generator may be used as the private key 172, and the public key 174 having a bit string of a predetermined length (for example, 256 bits) may be generated from the private key 172 according to a known cryptographic algorithm (for example, an elliptic curve cryptographic algorithm). In addition, when the device 100 itself generates the key pair, the random number generator may be realized by using the function provided by the OS 160, or may be realized by using a hard-wired circuit, such as an ASIC.

As the hash function 180, a known irreversible cryptographic hash function (for example, BLAKE) can be used. The hash function 180 calculates the hash value 178 having a bit string of a predetermined length (for example, 256 bits).

Not only the public key 174 but also an arbitrary keyword may be input to the hash function 180. As an arbitrary keyword, a message associated with a predetermined organization may be used. As the message associated with a predetermined organization, a message including the name of the trademark owned by the predetermined organization may be used. For example, the name (for example, "connectFree") of a registered trademark owned by the predetermined organization may be used as a keyword to be input to the hash function 180. By adopting such an implementation method, it is possible to prevent a third party other than the predetermined organization from implementing the network system 1 according to the present embodiment, a relevant method or program, and the like without the permission of the predetermined organization.

The entirety or part of the hash value 178 calculated by the hash function 180 is used as the IP address 190. For example, when a 256-bit (64 digits in hexadecimal notation) hash value 178 is calculated, any 32 digits (for example, first 32 digits) of the 64-digit hash value 178 may be used as the IP address 190 (128 bits) corresponding to IPv6. Alternatively, the first eight digits of the 64-digit hash value 178 may be determined as the IP address 190 (32 bits) corresponding to IPv4.

Alternatively, a 128-bit hash value 178 may be calculated from the hash function 180 in consideration of the IP address 190 (128 bits) corresponding to IPv6. In this case, the entirety of the calculated hash value 178 can be determined as the IP address 190 (128 bits) corresponding to IPv6.

According to the present embodiment, the IP address 190 unique to the device 100 can be determined based on the public key 174 of the device 100. Thus, the device 100 can be connected to a network, such as the Internet, by using the IP address 190 determined by the device 100. In addition, even if there is no service provider (server) that manages the global IP address, such as an Internet service provider (ISP), the device 100 can perform data communication using the IP address 190 determined by itself. In addition, even if there is no server that manages private IP addresses such as a DHCP (Dynamic Host Configuration Protocol) server mounted on an access point or the like, the device 100 can perform data communication by making a connection to a global network, such as the Internet, using the IP address 190 determined by itself. Therefore, it is possible to improve the user experience and user convenience for connecting to a network, such as the Internet.

### (c2: Unique character string)

It may be possible to identify that the IP address 190 determined by the device 100 has been determined according to the processing procedure according to the present embodiment. In order to perform such identification, for example, the IP address 190 may include a predetermined eigenvalue (unique character string) for identification. That is, the determined IP address may include a predetermined eigenvalue (unique character string) for identification.

As an example, the first two digits (first and second digits from the beginning) of the IP address 190 in hexadecimal notation may be fixed to a predetermined unique character string (for example, "FC"). Usually, since the hash function 180 is a one-way function, the public key 174 cannot be calculated back from the IP address 190. For this reason, the private key 172 and the public key 174 may be repeatedly generated using a random number generator until the determined IP address 190 satisfies predetermined conditions (in this case, the first two digits become a predetermined eigenvalue). That is, the public key 174 may be determined so that the IP address 190 determined based on the hash value calculated from the public key 174 according to the hash function conforms to a predetermined format.

In this manner, by making a predetermined eigenvalue (for example, the first two digits are "FC") for identification be included in the IP address 190, a third party can determine whether or not the IP address 190 of the device 100 has been determined by the device 100 itself.

### (c3: Type identification information)

The IP address 190 determined by the device 100 may include information by which the type of the device 100 can be identified. In order to perform such identification, for example, the IP address 190 may include a value corresponding to the type of the device 100. That is, the determined IP address 190 may include a value corresponding to the type of the device 100 that has determined the IP address 190.

As an example, a value (type identification information) corresponding to the type of the device 100 may be embedded in the third and fourth digits from the beginning of the IP address 190 in hexadecimal notation.

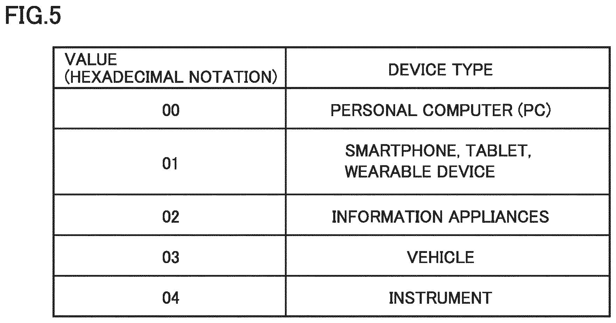

Fig. 5 is a diagram showing an example of type identification information embedded in the IP address used in the network system 1 according to the present embodiment. The type identification information shown in Fig. 5 may be stored in advance in the ROM 108 (see Fig. 2) of the control unit 110 of each device 100. As an example, a value corresponding to the type of device shown in Fig. 5 can be used.

As shown in Fig. 5, for example, when the type of the device 100 is a personal computer, a value "00" indicating the personal computer is set in the third and fourth digits from the beginning of the IP address 190.

As described above, since the hash function 180 is usually a one-way function, the public key 174 cannot be calculated back from the IP address 190. For this reason, the private key 172 and the public key 174 may be repeatedly generated using a random number generator until the determined IP address 190 satisfies predetermined conditions (in this case, the third and fourth digits from the beginning become a value indicating the type of the device 100). That is, the public key 174 may be determined so that the IP address 190 determined based on the hash value calculated from the public key 174 according to the hash function conforms to a predetermined format.

In this manner, by making the value indicating the type of the device 100 be included in the IP address 190, a third party can identify the type of the device 100 from the IP address 190 determined by the device 100.

### (c4: Registration of public key 174 and acquisition of digital certificate 176)

Next, the registration of the public key 174 and the acquisition of the digital certificate 176 will be described.

The device 100 acquires the digital certificate 176 for proving the validity of the public key 174 from the certificate authority 200. As a procedure for acquiring the digital certificate 176, the public key 174 is transmitted from the device 100 to the certificate authority 200 for registration, and the digital certificate 176 associated with the registered public key 174 is acquired from the certificate authority 200.

More specifically, the device 100 (control unit 110) transmits the public key 174 and a digital certificate issuance request (hereinafter, also referred to as a "certificate signing request") to the certificate authority 200 through the network. In response to the certificate signing request received from the device 100, the certificate authority 200 registers the public key 174 and issues the digital certificate 176 associated with the registered public key 174. Then, the certificate authority 200 transmits the digital certificate 176 to the device 100 through the network.

Typically, the digital certificate 176 includes owner information of the digital certificate 176 (in this example, the device 100), issuer information of the digital certificate 176 (in this example, the certificate authority 200), digital signature of the issuer, expiration date of the digital certificate 176, and the like.

The certificate authority 200 may be operated by a predetermined organization, or may be an intermediate certificate authority associated with a root certificate authority operated by a predetermined organization. In addition, in registering the public key 174 and issuing the digital certificate 176 associated with the public key 174, a predetermined fee and/or a maintenance fee may be required for a predetermined organization.

According to the present embodiment, the public key 174 is directly authenticated by the certificate authority 200 through the registration of the public key 174 and the acquisition of the public key 174, so that the IP address 190 determined based on the public key 174 is indirectly authenticated by the certificate authority 200. By such authentication by the certificate authority 200, the device 100 can realize data communication through the network by using the authenticated IP address 190.

In addition, the digital certificate 176 associated with the public key may include information relevant to the attributes (hereinafter, also referred to as "attribute information") of the device 100 in order to improve confidentiality. As the attribute information of the device 100, for example, the version information of the OS 160 of the device 100 or the communication processing program 170 and the serial number of the hardware (for example, a processor or a storage) forming the device 100 can be used. In this case, the device 100 may transmit the attribute information of the device 100 to the certificate authority 200 when transmitting the public key 174 and the certificate signing request. In addition, the attribute information of the device 100 included in the digital certificate 176 may be encrypted by a known irreversible cryptographic hash function or the like.

In this manner, by making the attribute information of the device 100 be included in the digital certificate 176, it is possible to authenticate that the digital certificate 176 has been issued in response to the certificate signing request from the device 100 itself. That is, it is possible to more reliably prevent a device other than the device 100 from impersonating the device 100 and using the public key 174 and the digital certificate 176 of the device 100.

### (c5: Processing procedure)

Next, a processing procedure for providing an authenticated IP address in each device 100 will be described.

Fig. 6 is a flowchart showing a processing procedure in which the device 100 provides an authenticated IP address in the network system 1 according to the present embodiment. The processing procedure shown in Fig. 6 is executed in each device 100, and each step shown in Fig. 6 is executed by the control unit 110 of each device 100.

Referring to Fig. 6, the device 100 acquires a key pair (the private key 172 and the public key 174) generated according to an arbitrary algorithm (step S1). This key pair may be generated by the device 100 itself, or may be acquired from the outside by the device 100. Alternatively, the device 100 may acquire only the private key 172 from the outside and generate the public key 174 internally.

Then, the device 100 calculates the hash value 178 by inputting the public key 174 to the predetermined hash function 180, and determines the IP address 190 of the device 100 from the entirety or part of the calculated hash value 178 (step S2). That is, the device 100 determines the IP address of the device itself based on the hash value 178 calculated from the public key 174 according to the hash function 180.

In addition, an appropriate key pair (the private key 172 and the public key 174) may be generated so that a unique character string (for example, the first and second digits from the beginning of the IP address 190) and/or type identification information (for example, the third and fourth digits from the beginning of the IP address 190) are included in the IP address 190.

In addition, the device 100 transmits the public key 174 and a digital certificate issuance request (certificate signing request) to the certificate authority 200 (step S3). In response to the certificate signing request received from the device 100, the certificate authority 200 registers the public key 174 and issues the digital certificate 176 associated with the registered public key 174. Then, the certificate authority 200 transmits the digital certificate 176 to the device 100 through the network. Then, the device 100 receives the digital certificate 176 from the certificate authority 200 and stores the digital certificate 176 (step S4).

In this manner, the device 100 acquires the digital certificate 176 associated with the public key 174 from the certificate authority.

In addition, the execution order of the processing of step S2 and the processing of steps S3 and S4 does not matter.

### <D. IP address notification>

Next, a process relevant to IP address notification between the devices 100 in the network system 1 according to the present embodiment will be described.

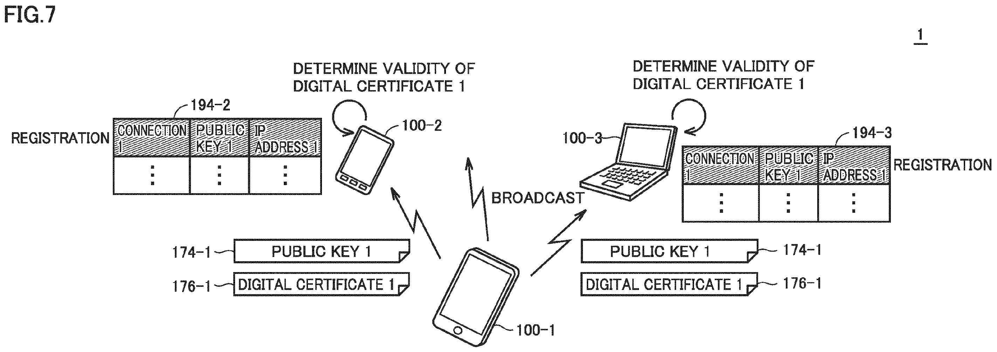

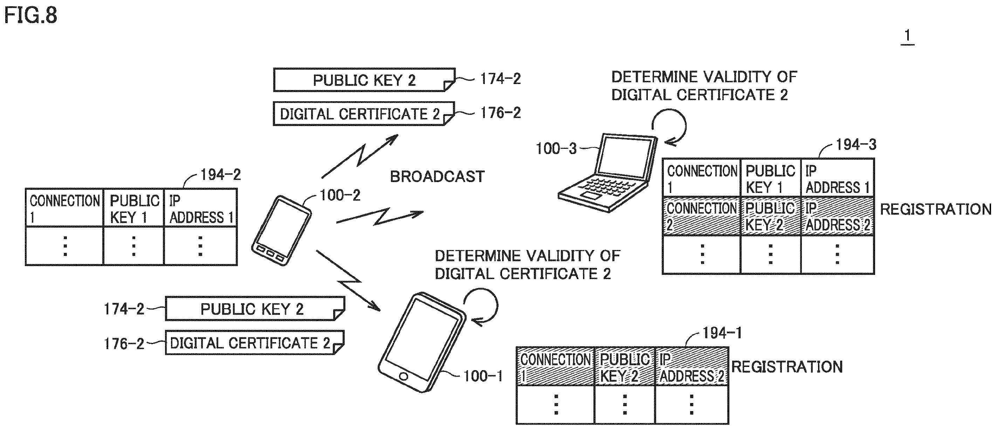

Figs. 7 and 8 are diagrams for describing the process relevant to the IP address notification in the network system 1 according to the present embodiment. Figs. 7 and 8 show examples of exchanging IP addresses between three devices 100-1, 100-2, and 100-3. In addition, the same processing can be performed between the two devices 100, or the same processing can be performed among a larger number of devices 100.

In the state shown in Figs. 7 and 8, it is assumed that the devices 100-1, 100-2, and 100-3 have determined IP addresses 190-1, 190-2, and 190-3, respectively, according to the procedure described above and the devices 100-1, 100-2, and 100-3 have completed the registration of public keys 174-1, 174-2, and 174-3 in the certificate authority 200 and the acquisition of digital certificates 176-1, 176-2, and 176-3 from the certificate authority 200.

As shown in Figs. 7 and 8, each device 100 transmits (broadcasts) the public key 174 and the digital certificate 176 associated with the public key 174 of each device regularly or every event. That is, each device 100 transmits the public key 174 and the digital certificate 176 to another device.

Fig. 7 shows an example in which the device 100-1 transmits (broadcasts) the public key 174-1 and the digital certificate 176-1 associated with the public key 174-1. In the example shown in Fig. 7, it is assumed that the devices 100-2 and 100-3 can receive the public key 174-1 and the digital certificate 176-1 transmitted from the device 100-1. Then, the devices 100-2 and 100-3 determine whether or not the digital certificate 176-1 is valid. If it is determined that the digital certificate 176-1 is valid, the devices 100-2 and 100-3 determine the IP address 190-1 of the device 100-1 based on the associated public key 174-1 and register these in connection tables 194-2 and 194-3, respectively.

Here, the connection table includes information of each device 100 for data communication, and each device 100 identifies the IP address of the destination device 100 or the like and establishes a necessary session with reference to the connection table.

More specifically, the device 100-2 first determines whether or not the digital certificate 176-1 broadcast from the device 100-1 is valid. In the process of determining the validity, the integrity of the digital certificate 176-1 is verified.

As an example of the process for verifying integrity, first, the device 100-2 checks the owner information of the digital certificate 176-1, the issuer information of the digital certificate 176-1, and the presence of the issuer's digital signature. Then, the device 100-2 determines whether or not the digital certificate 176-1 is within the expiration date. In addition, the device 100-2 determines whether or not the issuer of the digital certificate 176-1 is reliable. In particular, when the digital certificate 176-1 is issued by an intermediate certificate authority, the device 100-2 identifies the root certificate authority associated with the intermediate certificate authority that has issued the digital certificate 176-1, and determines whether or not the identified root certificate authority is reliable. For example, when the identified root certificate authority matches one root certificate authority or any of a plurality of root certificate authorities stored in the device 100-1, it is determined that the issuer of the digital certificate 176-1 is reliable.

If the determination process described above is passed, the device 100-2 determines that the digital certificate 176-1 broadcast from the device 100-1 is valid. Then, the device 100-2 calculates a hash value 178-1 by inputting the public key 174-1 broadcast from the device 100-1 to the predetermined hash function 180, and determines the IP address 190-1 of the device 100-1 using the entirety or part of the calculated hash value 178-1. Here, it is assumed that the devices 100-1 and 100-2 have a common hash function 180. In addition, it is assumed that the process of determining the IP address 190-1 from the hash value 178-1 is also common between the devices 100-1 and 100-2.

Through the above processing, the device 100-2 can determine the IP address 190-1 of the device 100-1. Then, the device 100-2 adds the entry of the determined IP address 190-1 of the device 100-1 to the connection table 194-2. In addition, the public key 174-1 may be registered in association with the IP address 190-1.

In addition, the same processing as in the device 100-2 is executed in the device 100-3, and the entry of the determined IP address 190-1 of the device 100-1 is added to the connection table 194-3 of the device 100-3. The public key 174-1 may be registered in association with the IP address 190-1.

By the processing shown in Fig. 7, the device 100-2 and the device 100-3 can acquire the IP address 190-1 of the device 100-1.

Fig. 8 shows an example in which the device 100-2 transmits (broadcasts) the public key 174-2 and the digital certificate 176-2 associated with the public key 174-2. In the example shown in Fig. 8, it is assumed that the devices 100-1 and 100-3 can receive the public key 174-2 and the digital certificate 176-2 transmitted from the device 100-2. Then, the devices 100-1 and 100-3 determine whether or not the digital certificate 176-2 is valid. If it is determined that the digital certificate 176-2 is valid, the devices 100-1 and 100-3 determine the IP address 190-2 of the device 100-2 based on the associated public key 174-2 and register these in connection tables 194-1 and 194-3, respectively.

Since a series of processes executed by the devices 100-1 and 100-3 are the same as the processes described with reference to Fig. 7, the detailed description will not be repeated. By the processing shown in Fig. 8, the device 100-1 and the device 100-3 can acquire the IP address 190-2 of the device 100-2.

In addition, the device 100-3 may transmit (broadcast) the public key 174-3 and the digital certificate 176-3 associated with the public key 174-3. It is assumed that the devices 100-1 and 100-2 can receive the public key 174-3 and the digital certificate 176-3 transmitted from the device 100-3. Then, the devices 100-1 and 100-2 determine whether or not the digital certificate 176-3 is valid. If it is determined that the digital certificate 176-3 is valid, the devices 100-1 and 100-2 determine the IP address 190-3 of the device 100-3 based on the associated public key 174-3 and register these in the connection tables 194-1 and 194-2, respectively. By such processing, the device 100-1 and the device 100-2 can acquire the IP address 190-3 of the device 100-3.

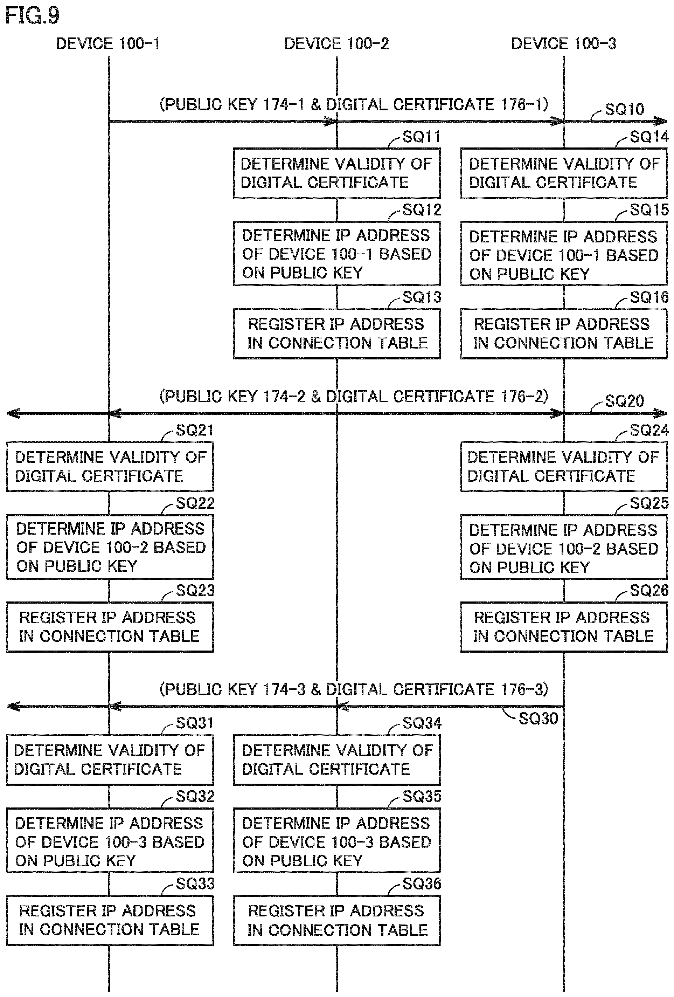

Fig. 9 is a sequence chart showing a processing procedure relevant to IP address notification in the network system 1 according to the present embodiment. Fig. 9 shows processing procedures in the three devices 100-1, 100-2, and 100-3 so as to correspond to Figs. 7 and 8.

The device 100-1 transmits (broadcasts) the public key 174-1 and the digital certificate 176-1 associated with the public key 174-1 (sequence SQ10).

Upon receiving the public key 174-1 and the digital certificate 176-1 transmitted from the device 100-1, the device 100-2 determines the validity of the digital certificate 176-1 (sequence SQ11). When it is determined that the digital certificate 176-1 is valid, the device 100-2 determines the IP address 190-1 of the device 100-1 based on the public key 174-1 (sequence SQ12), and registers the determined IP address 190-1 of the device 100-1 in the connection table 194-2 (sequence SQ13).

Similarly, upon receiving the public key 174-1 and the digital certificate 176-1 transmitted from the device 100-1, the device 100-3 determines the validity of the digital certificate 176-1 (sequence SQ14). When it is determined that the digital certificate 176-1 is valid, the device 100-3 determines the IP address 190-1 of the device 100-1 based on the public key 174-1 (sequence SQ15), and registers the determined IP address 190-1 of the device 100-1 in the connection table 194-3 (sequence SQ16).

In addition, the device 100-2 transmits (broadcasts) the public key 174-2 and the digital certificate 176-2 associated with the public key 174-2 (sequence SQ20).

Upon receiving the public key 174-2 and the digital certificate 176-2 transmitted from the device 100-2, the device 100-1 determines the validity of the digital certificate 176-2 (sequence SQ21). When it is determined that the digital certificate 176-2 is valid, the device 100-1 determines the IP address 190-2 of the device 100-2 based on the public key 174-2 (sequence SQ22), and registers the determined IP address 190-2 of the device 100-2 in the connection table 194-1 (sequence SQ23).

Similarly, upon receiving the public key 174-2 and the digital certificate 176-2 transmitted from the device 100-2, the device 100-3 determines the validity of the digital certificate 176-2 (sequence SQ24). When it is determined that the digital certificate 176-2 is valid, the device 100-3 determines the IP address 190-2 of the device 100-2 based on the public key 174-2 (sequence SQ25), and registers the determined IP address 190-2 of the device 100-2 in the connection table 194-3 (sequence SQ26).

In addition, the device 100-3 transmits (broadcasts) the public key 174-3 and the digital certificate 176-3 associated with the public key 174-3 (sequence SQ30).

Upon receiving the public key 174-3 and the digital certificate 176-3 transmitted from the device 100-3, the device 100-1 determines the validity of the digital certificate 176-3 (sequence SQ31). When it is determined that the digital certificate 176-3 is valid, the device 100-1 determines the IP address 190-3 of the device 100-3 based on the public key 174-3 (sequence SQ32), and registers the determined IP address 190-3 of the device 100-3 in the connection table 194-1 (sequence SQ33).

Similarly, upon receiving the public key 174-3 and the digital certificate 176-3 transmitted from the device 100-3, the device 100-2 determines the validity of the digital certificate 176-3 (sequence SQ34). When it is determined that the digital certificate 176-3 is valid, the device 100-2 determines the IP address 190-3 of the device 100-3 based on the public key 174-3 (sequence SQ35), and registers the determined IP address 190-3 of the device 100-3 in the connection table 194-2 (sequence SQ36).

In addition, the processes of sequences SQ10 to SQ16, the processes of sequences SQ20 to SQ26, and the processes of sequences SQ30 to SQ36 can be executed in any order or in parallel.

Thus, when the public key 174 and the digital certificate 176 associated with the public key 174 are received from another device, each device 100 determines the validity of the digital certificate 176 (sequences SQ11, SQ14, SQ21, SQ24, SQ31, and SQ34). Then, when it is determined that the digital certificate 176 is valid, each device 100 determines the IP address of another device based on the hash value calculated from the public key 174 according to the hash function (sequences SQ12, SQ15, SQ22, SQ25, SQ32, and SQ35).

As described above, in the network system 1 according to the present embodiment, on the condition that the digital certificate 176 transmitted from another device 100 is determined to be valid, the IP address 190 of another device 100 is determined based on the public key 174 associated with the digital certificate 176. Since the IP address 190 is determined based on the public key 174 on the condition that the digital certificate 176 associated with the public key 174 is valid, the validity of the public key 174 and the validity of the IP address 190 can be guaranteed. Therefore, it is possible to realize reliable data communication between the devices 100.

In addition, in the network system 1 according to the present embodiment, since the IP address of each device 100 can be known based on the public key 174 broadcast from each device 100, the devices 100 can be directly connected to each other even if there is no server that manages IP addresses. In particular, even if there is no virtual private network (VPN) server or the like, it is possible to realize communication in which confidentiality is ensured between the devices 100, so that the cost and power consumption for maintaining the VPN server can be reduced.

### <E. Data communication processing>

Next, data communication processing in the network system 1 according to the present embodiment will be described.

### (e1: Background)

In the network system 1 according to the present embodiment, data is exchanged between the devices 100 by so-called P2P (Peer to Peer). In addition, each device 100 has a routing function and a data transmission function, and data transmission by P2P is repeated until the destination device is reached. With such a function, it is possible to realize a network capable of independently performing data communication.

Since the data (typically, a packet or a frame) communicated by P2P is encrypted by the encryption key set between the devices 100 involved in each P2P, it is possible to realize secure data communication. In the following description, as a typical example, data is transmitted in the form of "packets".

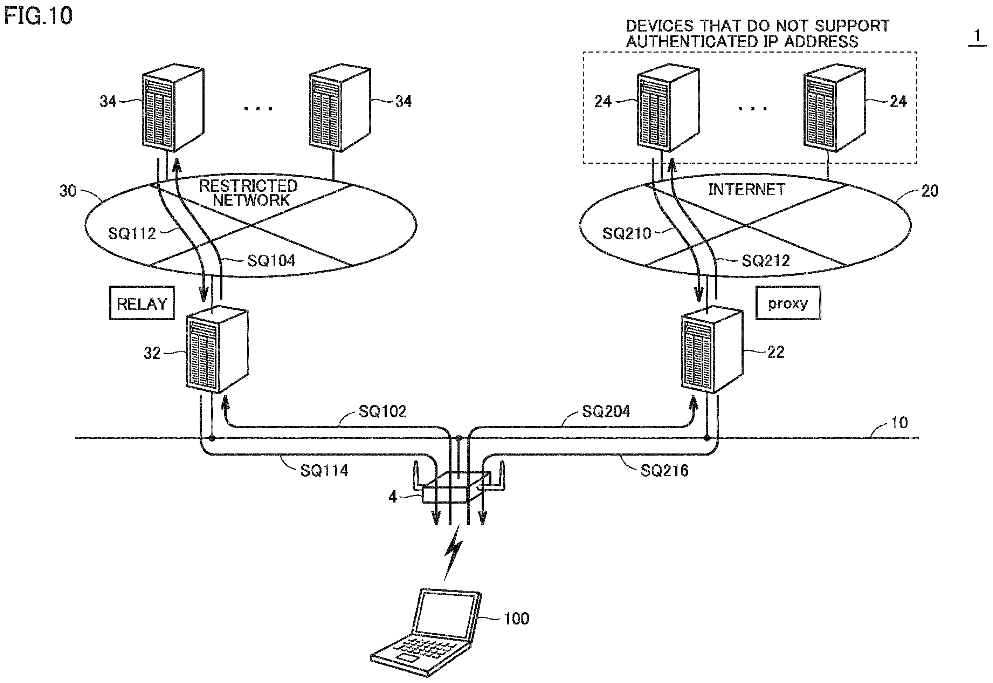

Fig. 10 is a schematic diagram showing an example of the network configuration of the network system 1 according to the present embodiment. The network system 1 shown in Fig. 10 includes a local line 10 including an access point 4, an Internet 20, and a restricted network 30. A proxy server 22 that also functions as a gateway is arranged between the local line 10 and the Internet 20. A relay server 32 that also functions as a gateway is arranged between the local line 10 and the restricted network 30.

The Internet 20 includes one or more servers 24 that provide various network services. The restricted network 30 is, for example, a network that is completely or partially isolated from the Internet 20 and is accessible only by the device 100 (or the user) belonging to a particular company or organization. The restricted network 30 includes one or more servers 34 that provide various network services. Here, examples of various network services include Web, mail, and database. In addition, the proxy server 22 and the relay server 32 can also be regarded as servers that provide network services.

As an example, in the network system 1 shown in Fig. 10, the device 100, the proxy server 22, the relay server 32, and the server 34 all correspond to devices having authenticated IP addresses. That is, these devices can perform data communication using the authenticated IP address as described above. On the other hand, it is assumed that one or more servers 24 on the Internet 20 are having only a normal IP address (that is, the assigned IP address is not authenticated).

When a known network is assumed, as shown in Fig. 10, there may be data exchanged between devices that do not support data communication using an authenticated IP address. Therefore, by implementing the following functions, the device 100 according to the present embodiment can exchange data not only with a device that supports data communication using an authenticated IP address but also a device that does not have an authenticated IP address or does not support data communication using an authenticated IP address.

### (e2: Data communication between devices having authenticated IP addresses)

First, data communication between devices having authenticated IP addresses will be described. As an example, in the network system 1 shown in Fig. 10, data communication between the device 100 and the server 34 will be described.

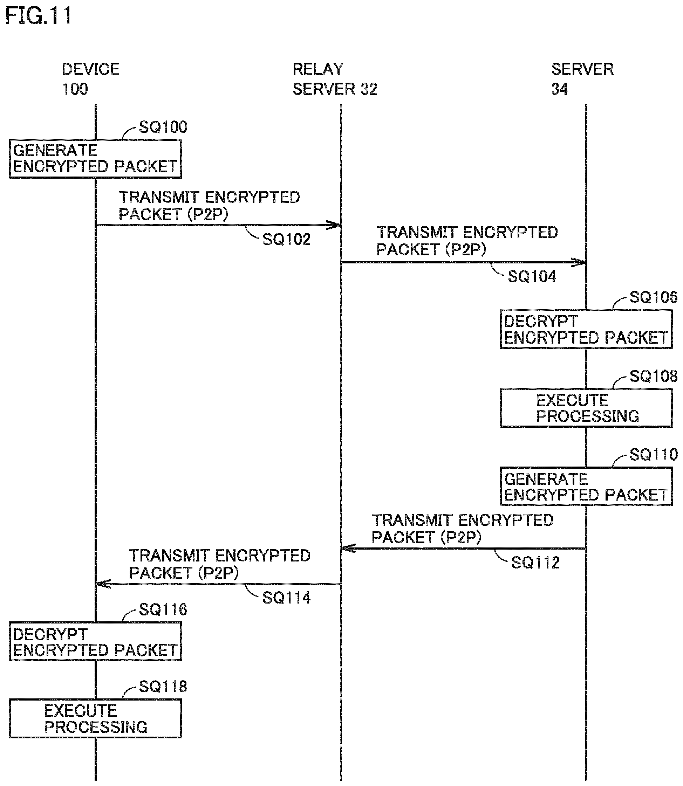

Fig. 11 is a sequence diagram showing a procedure of data communication between devices having authenticated IP addresses in the network system 1 according to the present embodiment. Fig. 11 shows a data transmission method in a network to which a plurality of devices are connected. Fig. 11 shows a case where an arbitrary request is transmitted from the device 100 to the server 34 and the server 34 responds to the device 100 with a result of executing the processing according to the request. In addition, the same sequence numbers as the sequence numbers corresponding to the main process shown in Fig. 11 are shown in Fig. 10.

Referring to Fig. 11, the device 100 generates an encrypted packet including a request to the server 34 (sequence SQ100). A session is established in advance between the device 100 and the server 34, and the packet from the device 100 to the server 34 is encrypted according to the encryption method agreed upon in the established session. The generated encrypted packet is addressed to the server 34.

Then, the device 100 establishes a session with the relay server 32 and transmits the encrypted packet by P2P (sequence SQ102). That is, the process of transmitting the generated encrypted packet from the device 100 to the server 34 by P2P is executed. In the P2P transmission, the encrypted packet may be further encrypted. In this case, the encryption is performed according to the encryption method agreed upon in the session established between the device 100 and the relay server 32.

The relay server 32 further transmits the encrypted packet received from the device 100 to the server 34. That is, the relay server 32 establishes a session with the server 34 and transmits an encrypted packet by P2P (sequence SQ104). In addition, in the P2P transmission, the encrypted packet may be further encrypted.

The server 34 determines that the encrypted packet received from the relay server 32 is addressed to the device itself, and decrypts the encrypted packet (sequence SQ106). Then, the server 34 executes the processing according to the request included in the decryption result of the encrypted packet (sequence SQ108). The server 34 generates an encrypted packet including the execution result of the processing (sequence SQ110). The server 34 transmits the encrypted packet to the relay server 32 by P2P (sequence SQ112). The relay server 32 further transmits the encrypted packet received from the server 34 to the device 100. That is, the relay server 32 transmits the encrypted packet to the device 100 by P2P (sequence SQ114).

The device 100 determines that the encrypted packet received from the relay server 32 is addressed to the device itself, and decrypts the encrypted packet (sequence SQ116). Then, the device 100 executes processing, such as displaying the result, by using the execution result of the process included in the decryption result of the encrypted packet (sequence SQ118).

As described above, since the encrypted packets are sequentially transmitted by P2P between the devices having the authenticated IP addresses, data can be securely exchanged.

### (e3: Data communication with a device that does not support an authenticated IP address)

Next, data communication with a device that does not support an authenticated IP address will be described. As an example, in the network system 1 shown in Fig. 10, data communication between the device 100 and the server 24 will be described.

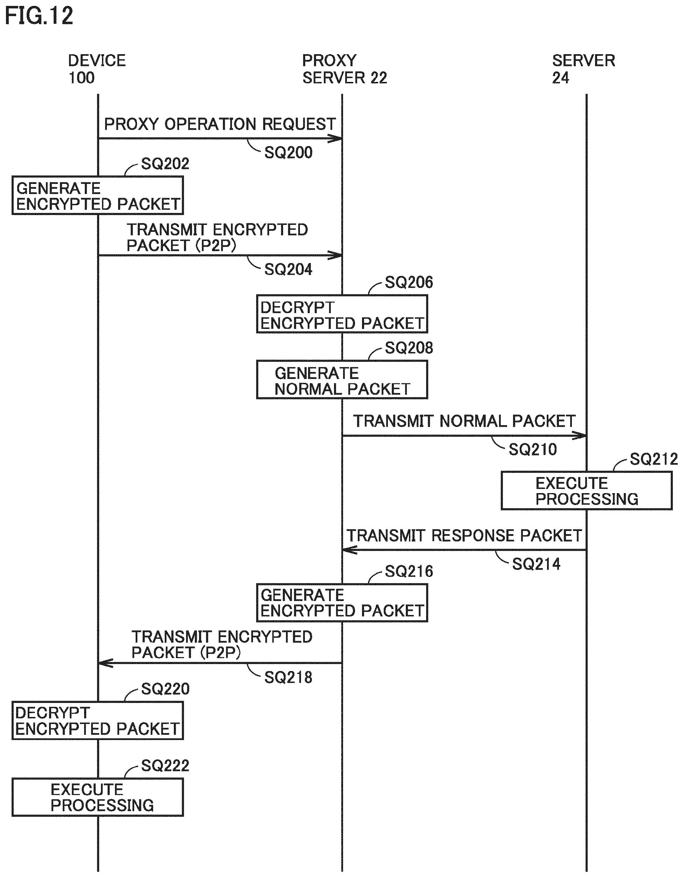

Fig. 12 is a sequence diagram showing a procedure of data communication between devices having authenticated IP addresses in the network system 1 according to the present embodiment. Fig. 12 shows a case where an arbitrary request is transmitted from the device 100 to the server 24 and the server 24 responds to the device 100 with a result of executing the processing according to the request. At this time, the proxy server 22 serves as a proxy server between the device 100 and the server 24. In addition, the same sequence numbers as the sequence numbers corresponding to the main process shown in Fig. 12 are shown in Fig. 10.

In the following description, as a typical example, only the proxy operation of the proxy server 22 will be described. However, since it is not necessary to execute completely the same processing as the proxy operation, processing similar to the processing relevant to the proxy operation may be adopted. In addition, without being limited to the proxy operation, for example, a virus check function or a filtering function may be included.

Referring to Fig. 12, when a packet satisfying predetermined conditions is given by an arbitrary application or the like, the device 100 transmits a proxy operation request to the proxy server 22 (sequence SQ200). The predetermined conditions include, for example, that a packet addressed to a device that does not support data communication using an authenticated IP address is given. Upon receiving the proxy operation request, the proxy server 22 enables the proxy operation for the device 100. In this manner, the process of transmitting a request for enabling the proxy operation from the device 100 to the proxy server 22 is executed.

The proxy operation request may also be transmitted from the device 100 to the proxy server 22 by P2P. In addition, the proxy operation request transmitted by P2P may be encrypted.

The proxy operation request from the proxy server 22 and the device 100 may be executed by using a known protocol. More specifically, a protocol such as SOCKS (SOCKS4, SOCKS4a, and SOCKS5) can be used.

Then, the device 100 generates an encrypted packet including a request to the server 34 (sequence SQ202). A session is established in advance between the device 100 and the proxy server 22, and the packet from the device 100 to the proxy server 22 is encrypted according to the encryption method agreed upon in the established session. The generated encrypted packet is addressed to the proxy server 22, but also includes a packet addressed to the server 34.

Then, the device 100 transmits the encrypted packet to the proxy server 22 by P2P (sequence SQ204). That is, the process of transmitting the generated encrypted packet from the device 100 to the proxy server 22 by P2P is executed. In the P2P transmission, the encrypted packet may be further encrypted. In this case, the encryption is performed according to the encryption method agreed upon in the session established between the device 100 and the proxy server 22.

The proxy server 22 first decrypts the encrypted packet received from the device 100 (sequence SQ206). This is because a normal communication protocol using an IP address is used in the route ahead of the proxy server 22. Then, according to the request included in the decryption result of the encrypted packet, the server 34 performs data communication with the server 24 on behalf of the device 100. That is, the proxy server 22 generates a normal packet including a request included in the decryption result of the encrypted packet (sequence SQ208). Then, the proxy server 22 transmits the generated normal packet to the server 24 (sequence SQ210). In this manner, the proxy server 22 executes the process of transmitting the normal packet, which is generated by decrypting the encrypted packet, to the server 24.

In addition, when generating the normal packet, the proxy server 22 may appropriately change the header information and the like included in the packet from the device 100.

Then, the proxy server 22 transmits the generated normal packet to the server 24 (sequence SQ210). The transmission of the normal packet does not necessarily have to be P2P, and the packet may be appropriately transmitted according to normal TCP/IP, UDP/IP, or the like.

Upon receiving the normal packet from the proxy server 22, the server 24 executes the process according to the request included in the normal packet (sequence SQ212). Then, the server 24 transmits a normal packet (response packet) including the execution result of the processing to the proxy server 22 (sequence SQ214).

The proxy server 22 receives the response packet from the server 24 and generates an encrypted packet including the received normal packet (sequence SQ216). The generated encrypted packet is addressed to the device 100. Then, the proxy server 22 transmits the generated encrypted packet to the device 100 by P2P (sequence SQ218). In this manner, the process of transmitting the encrypted packet from the proxy server 22 to the device 100 by P2P is executed.

The device 100 determines that the encrypted packet received from the proxy server 22 is addressed to device itself, and decrypts the encrypted packet (sequence SQ220). Then, the device 100 executes processing, such as displaying the result, by using the processing execution result included in the decryption result of the encrypted packet (sequence SQ222).

As described above, since the encrypted packets are sequentially transmitted by P2P between the devices having the authenticated IP addresses, data can be securely exchanged. On the other hand, in the exchange of data with a device that does not support the authenticated IP address, data can be exchanged with any device by the proxy server 22 responding on behalf of the user.

### (e4: Processing procedure)

Next, a processing procedure in the device 100 and a processing procedure in the proxy server 22 will be described.

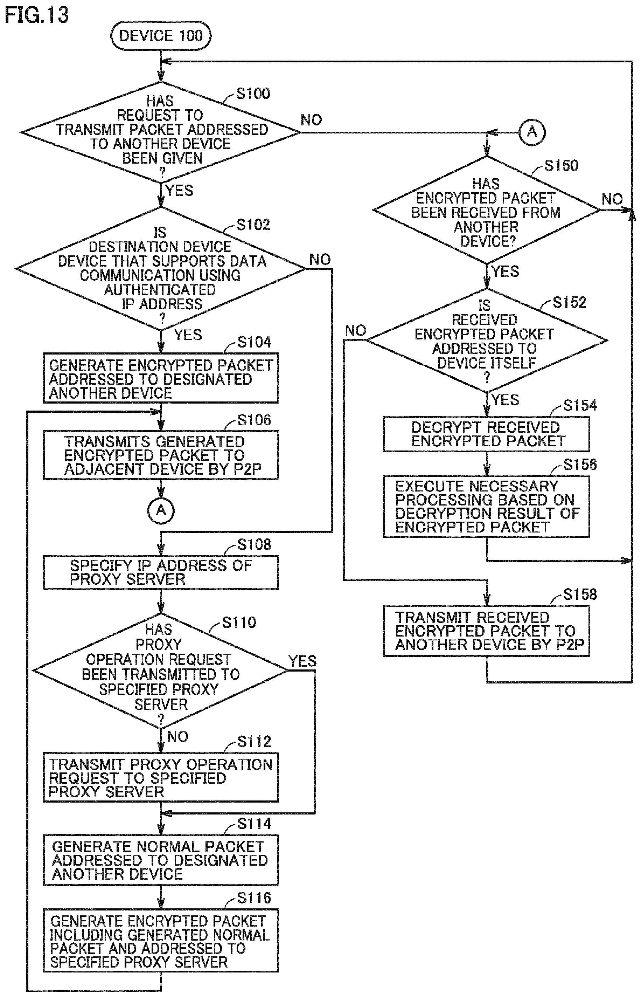

Fig. 13 is a flowchart showing a processing procedure in which the device 100 according to the present embodiment exchanges packets. Fig. 13 shows an example of a communication processing method in the device 100 connected to the network. Each step shown in Fig. 13 is executed by the control unit 110 (see Fig. 2) of the device 100 (typically realized by the cooperation of a processor and a memory).

Referring to Fig. 13, it is determined whether or not a request to transmit a packet addressed to another device has been given from an arbitrary application 300 or the like executed on the device 100 (step S100). If a request to transmit a packet addressed to another device is not given (NO in step S100), the processing of step S150 and steps subsequent thereto is executed.

On the other hand, if a request to transmit a packet addressed to another device is given (YES in step S100), the device 100 determines whether or not the destination device is a device that supports data communication using an authenticated IP address (step S102). Determining whether or not the destination device is a device that supports data communication using an authenticated IP address means determining whether or not the destination device can exchange the encrypted packet.

In step S102, the determination may be made based on, for example, whether or not the IP address of the destination device has a value shown in Fig. 5. Alternatively, only when the IP address of the destination device matches the IP address registered in the list held in advance by the device 100, it may be determined that the destination device is a device that supports data communication using an authenticated IP address. In other cases, it may be determined that the destination device is not a device that supports data communication using an authenticated IP address.

If the destination device is a device that supports data communication using an authenticated IP address (YES in step S102), the device 100 generates an encrypted packet addressed to designated another device according to the encryption method agreed upon in the session between the device 100 and the destination device (step S104). That is, if the destination device can exchange the encrypted packet, the device 100 generates an encrypted packet directed to the destination device according to the packet transmission request. Then, the device 100 transmits the generated encrypted packet to the adjacent device by P2P (step S106). Finally, the encrypted packet is transmitted to the destination device by P2P. Then, the processing of step S150 and steps subsequent thereto is executed.

On the other hand, if the destination device is not a device that supports data communication using an authenticated IP address (NO in step S102), the device 100 specifies the proxy server 22 serving as a proxy server for the device 100 (step S108). Typically, the proxy server 22 is specified by using the IP address.

Then, the device 100 determines whether or not the proxy operation request has been transmitted to the specified proxy server 22 (step S110). If the proxy operation request has not been transmitted to the specified proxy server 22 (NO in step S110), the device 100 transmits the proxy operation request to the specified proxy server 22 (step S112). The proxy operation request corresponds to a request for enabling the proxy operation. If the proxy operation request has already been transmitted to the specified proxy server 22 (YES in step S110), the processing of step S112 is skipped.

Then, the device 100 generates a normal packet addressed to designated another device (step S114), and further generates an encrypted packet, which includes the generated normal packet and is addressed to the specified proxy server 22, according to the encryption method agreed upon in the session between the device 100 and the specified proxy server 22 (step S116). That is, if the destination device cannot exchange the encrypted packet, the device 100 generates an encrypted packet including a packet directed to the destination device according to a packet transmission request. Then, the device 100 transmits the generated encrypted packet to the adjacent device by P2P (step S106). Finally, the encrypted packet is transmitted to the proxy server 22 serving as a proxy server for the device 100 by P2P. Then, the processing of step S150 and steps subsequent thereto is executed.

The processing of steps S100 to S116 corresponds to the processing relevant to packet transmission. The processing of step S150 and steps subsequent thereto corresponds to the processing relevant to packet reception.

In step S150, the device 100 determines whether or not an encrypted packet has been received from another device (step S150). If the encrypted packet has not been received from another device (NO in step S150), the processing of step S100 and steps subsequent thereto is repeated.

If the encrypted packet has been received from another device (YES in step S150), the device 100 determines whether or not the received encrypted packet is addressed to the device itself (step S152). If the received encrypted packet is addressed to the device itself (YES in step S152), the device 100 decrypts the received encrypted packet (step S154), and executes necessary processing based on the decryption result of the encrypted packet (step S156). Then, the processing of step S100 and steps subsequent thereto is repeated.

On the other hand, if the received encrypted packet is not addressed to the device itself (NO in step S152), the device 100 transmits the received encrypted packet to another device by P2P (step S158). Then, the processing of step S100 and steps subsequent thereto is repeated.

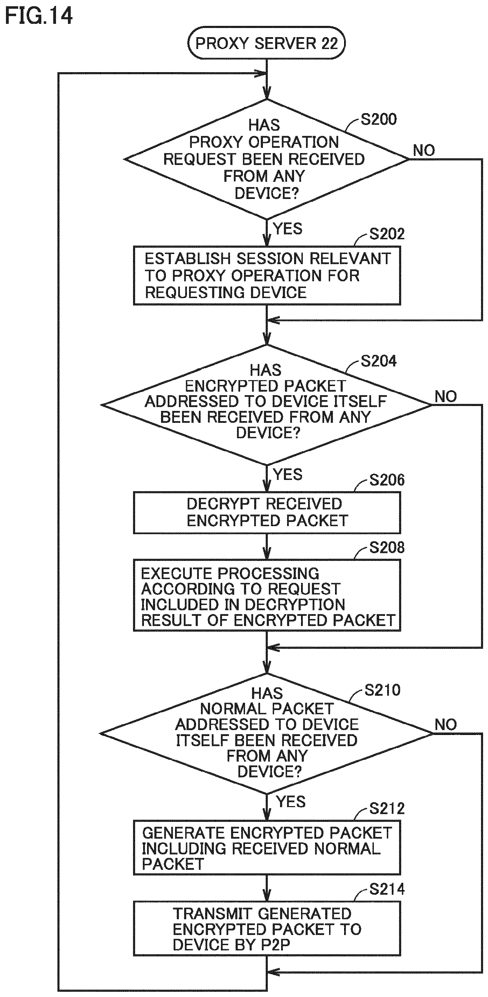

Fig. 14 is a flowchart showing a processing procedure in which the proxy server 22 according to the present embodiment exchanges packets. Each step shown in Fig. 14 is executed by the control unit of the proxy server 22 (typically realized by the cooperation of a processor and a memory).

Referring to Fig. 14, the proxy server 22 determines whether or not a proxy operation request has been received from any device (step S200). If a proxy operation request has been received from any device (YES in step S200), the proxy server 22 establishes a session relevant to the proxy operation for the requesting device (step S202). If a proxy operation request has not been received from any device (NO in step S200), the processing of step S202 is skipped.

Then, the proxy server 22 determines whether or not an encrypted packet addressed to the device itself has been received from any device (step S204). If an encrypted packet addressed to the device itself has been received from any device (YES in step S204), the proxy server 22 decrypts the received encrypted packet (step S206), and executes the processing according to the request included in the decryption result of the encrypted packet (step S208). If an encrypted packet addressed to the device itself has not been received from any device (NO in step S204), the processing of steps S206 and S208 is skipped.

Then, the proxy server 22 determines whether or not a normal packet addressed to the device itself has been received from any device (step S210). As the normal packet, a packet including a response from the above-described server 24 or the like is assumed. If a normal packet addressed to the device itself has been received from any device (YES in step S210), the proxy server 22 generates an encrypted packet including the received normal packet (step S212). Then, the proxy server 22 transmits the generated encrypted packet to the device 100 by P2P (step S214). If a normal packet addressed to the device itself has not been received from any device (NO in step S210), the processing of steps S212 and S214 is skipped. Then, the processing of step S200 and steps subsequent thereto is repeated.

As described above, there can be a network in which a device having an authenticated IP address and capable of exchanging encrypted packets and a device having no authenticated IP address and unable to exchange encrypted packets coexist. Even in such a network, the network system 1 according to the present embodiment uses a device serving as a proxy server, so that required data communication can be realized by the same procedure as when exchanging encrypted packets with a device having an authenticated IP address from the viewpoint of the device as a transmission source.

### <F. Advantages>

According to the network system 1 according to the present embodiment, even in a network including a device whose destination device cannot exchange encrypted packets, it is possible to realize data communication by P2P capable of maintaining a secure level while maintaining processing affinity.

It should be considered that the embodiment disclosed is an example in all points and not restrictive. The scope of the present invention is defined by the claims rather than the above description, and is intended to include all modifications within the scope and meaning equivalent to the claims.

### EXPLANATIONS OF LETTERS OR NUMERALS

- 1: NETWORK SYSTEM

- 2: NETWORK
- 4: ACCESS POINT
- 6: MOBILE BASE STATION
- 10: LOCAL LINE
- 20: INTERNET
- 22: PROXY SERVER
- 24, 34: SERVER
- 30: RESTRICTED NETWORK
- 32: RELAY SERVER
- 100: DEVICE
- 102: PROCESSOR
- 104: MAIN MEMORY
- 106: STORAGE
- 108: ROM
- 110: CONTROL UNIT
- 120: NETWORK INTERFACE
- 130: DISPLAY UNIT
- 140: INPUT UNIT
- 150: MEDIA INTERFACE
- 152: MEDIA
- 160: OS
- 170: COMMUNICATION PROCESSING PROGRAM
- 172: PRIVATE KEY
- 174: PUBLIC KEY
- 176: DIGITAL CERTIFICATE
- 178: HASH VALUE
- 180: HASH FUNCTION
- 190: IP ADDRESS
- 194: CONNECTION TABLE
- 200: CERTIFICATE AUTHORITY
- 300: APPLICATION

## Claims

1. A communication processing method in a device (100) connected to a network (2), the method comprising:
a step of determining (S102) whether or not a destination device is able to exchange encrypted packets in response to a packet transmission request based on an IP address of the destination device;
a step of generating (S104) a first encrypted packet directed to the destination device according to the packet transmission request if the destination device is able to exchange encrypted packets;
a step of transmitting (S106) the first encrypted packet to the destination device by P2P;
a step of generating (S114) a second encrypted packet including a packet directed to the destination device according to the packet transmission request if the destination device is not able to exchange encrypted packets; and
a step of transmitting (S106) the second encrypted packet to a device serving as a proxy server for the destination device by P2P.

2. The communication processing method according to claim 1, further comprising:
a step of specifying (S108) a device to be the proxy server; and
a step of transmitting (S112) a request for enabling a proxy operation to the specified device.

3. The communication processing method according to claim 2, further comprising:
a step of acquiring (S1) a private key and a public key;
a step of determining (S2) an IP address of the device itself based on a hash value calculated from the public key according to a hash function;
a step of acquiring (S4) a digital certificate associated with the public key from a certificate authority connected to a network; and
a step of transmitting (SQ10, SQ20, SQ30) the public key and the digital certificate to another device.

4. The communication processing method according to claim 3, further comprising:
a step in which, when the public key and a digital certificate associated with the public key are received from another device, validity of the digital certificate is determined (SQ11, SQ14, SQ21, SQ24, SQ31, SQ34); and
a step in which, when it is determined that the digital certificate is valid, an IP address of the another device is determined based on a hash value calculated from the public key according to a hash function (SQ12, SQ15, SQ22, SQ25, SQ32, SQ35).

5. A device (100), comprising:
a network interface (120) for connecting to a network; and
a control unit (110) connected to the network interface,
wherein the control unit is configured to be able to execute:
processing for determining (S102) whether or not a destination device is able to exchange encrypted packets in response to a packet transmission request based on an IP address of the destination device;
processing for generating (S104) a first encrypted packet directed to the destination device according to the packet transmission request if the destination device is able to exchange encrypted packets;
processing for transmitting (S106) the first encrypted packet to the destination device by P2P;
processing for generating (S114) a second encrypted packet including a packet directed to the destination device according to the packet transmission request if the destination device is not able to exchange encrypted packets; and
processing for transmitting (S106) the second encrypted packet to a device serving as a proxy server for the destination device by P2P.

6. A communication processing program for a computer (100) having a network interface (120) for connecting to a network,
wherein, when the communication processing program is executed by the computer, the communication processing program causes the computer to execute the communication processing method according to any one of claims 1 to 4.

## Patentansprüche

1. Kommunikationsverarbeitungsverfahren in einer Vorrichtung (100), die mit einem Netzwerk (2) verbunden ist, das Verfahren umfassend:
einen Schritt des Bestimmens (S102), ob eine Zielvorrichtung fähig ist, verschlüsselte Pakete ansprechend auf eine Paketübertragungsanfrage basierend auf einer IP-Adresse der Zielvorrichtung auszutauschen oder nicht;
einen Schritt des Erzeugens (S104) eines ersten verschlüsselten Pakets, das an die Zielvorrichtung gerichtet ist, gemäß der Paketübertragungsanfrage, wenn die Zielvorrichtung fähig ist, verschlüsselte Pakete auszutauschen;
einen Schritt des Übertragens (S106) des ersten verschlüsselten Pakets an die Zielvorrichtung über P2P;
einen Schritt des Erzeugens (S114) eines zweiten verschlüsselten Pakets einschließlich eines Pakets, das an die Zielvorrichtung gerichtet ist, gemäß der Paketübertragungsanfrage, wenn die Zielvorrichtung nicht fähig ist, verschlüsselte Pakete auszutauschen; und
einen Schritt des Übertragens (S106) des zweiten verschlüsselten Pakets an eine Vorrichtung, die als Proxy-Server für die Zielvorrichtung dient, über P2P.

2. Kommunikationsverarbeitungsverfahren nach Anspruch 1, ferner umfassend:
einen Schritt des Spezifizierens (S108), dass eine Vorrichtung der Proxy-Server ist; und
einen Schritt des Übertragens (S112) einer Anfrage zur Aktivierung eines Proxy-Vorgangs an die spezifizierte Vorrichtung.

3. Kommunikationsverarbeitungsverfahren nach Anspruch 2, ferner umfassend:
einen Schritt des Erhaltens (S1) eines privaten Schlüssels und eines öffentlichen Schlüssels;
einen Schritt des Bestimmens (S2) einer IP-Adresse der Vorrichtung selbst basierend auf einem Hash-Wert, der aus dem öffentlichen Schlüssel gemäß einer Hash-Funktion berechnet wird;
einen Schritt des Erhaltens (S4) eines digitalen Zertifikats, das dem öffentlichen Schlüssel zugehörig ist, von einer Zertifizierungsstelle, die mit einem Netzwerk verbunden ist; und
einen Schritt des Übertragens (SQ10, SQ20, SQ30) des öffentlichen Schlüssels und des digitalen Zertifikats an eine andere Vorrichtung.

4. Kommunikationsverarbeitungsverfahren nach Anspruch 3, ferner umfassend:
einen Schritt, bei dem, wenn der öffentliche Schlüssel und ein digitales Zertifikat, das dem öffentlichen Schlüssel zugehörig ist, von einer anderen Vorrichtung empfangen werden, die Gültigkeit des digitalen Zertifikats bestimmt wird (SQ11, SQ14, SQ21, SQ24, SQ31, SQ34); und
einen Schritt, bei dem, wenn bestimmt wird, dass das digitale Zertifikat gültig ist, eine IP-Adresse der anderen Vorrichtung basierend auf einem Hash-Wert, der aus dem öffentlichen Schlüssel gemäß einer Hash-Funktion berechnet wird, bestimmt wird (SQ12, SQ15, SQ22, SQ25, SQ32, SQ35).

5. Vorrichtung (100), umfassend:
eine Netzwerkschnittstelle (120) zum Verbinden mit einem Netzwerk; und
eine Steuereinheit (110), die mit der Netzwerkschnittstelle verbunden ist,
wobei die Steuereinheit ausgestaltet ist, dass sie fähig ist, Folgendes auszuführen:
Verarbeiten zum Bestimmen (S102), ob eine Zielvorrichtung fähig ist, verschlüsselte Pakete ansprechend auf eine Paketübertragungsanfrage basierend auf einer IP-Adresse der Zielvorrichtung auszutauschen oder nicht;
Verarbeiten zum Erzeugen (S104) eines ersten verschlüsselten Pakets, das an die Zielvorrichtung gerichtet ist, gemäß der Paketübertragungsanfrage, wenn die Zielvorrichtung fähig ist, verschlüsselte Pakete auszutauschen;
Verarbeiten zum Übertragen (S106) des ersten verschlüsselten Pakets an die Zielvorrichtung über P2P;
Verarbeiten zum Erzeugen (S114) eines zweiten verschlüsselten Pakets einschließlich eines Pakets, das an die Zielvorrichtung gerichtet ist, gemäß der Paketübertragungsanfrage, wenn die Zielvorrichtung nicht fähig ist, verschlüsselte Pakete auszutauschen; und
Verarbeiten zum Übertragen (S106) des zweiten verschlüsselten Pakets an eine Vorrichtung, die als Proxy-Server für die Zielvorrichtung dient, über P2P.

6. Kommunikationsverarbeitungsprogramm für einen Computer (100), der eine Netzwerkschnittstelle (120) aufweist, um mit einem Netzwerk verbunden zu werden,
wobei, wenn das Kommunikationsverarbeitungsprogramm durch den Computer ausgeführt wird, das Kommunikationsverarbeitungsprogramm veranlasst, dass der Computer das Kommunikationsverarbeitungsverfahren nach einem der Ansprüche 1 bis 4 ausführt.

## Revendications

1. Procédé de traitement de communication dans un dispositif (100) connecté à un réseau (2), le procédé comprenant :
une étape consistant à déterminer (S102) si un dispositif de destination est capable ou non d'échanger des paquets chiffrés en réponse à une demande de transmission de paquets sur la base d'une adresse IP du dispositif de destination ;
une étape consistant à générer (S104) un premier paquet chiffré destiné au dispositif de destination en fonction de la demande de transmission de paquets si le dispositif de destination est capable d'échanger des paquets chiffrés ;
une étape consistant à transmettre (S106) le premier paquet chiffré au dispositif de destination par P2P ;
une étape consistant à générer (S114) un second paquet chiffré comportant un paquet destiné au dispositif de destination en fonction de la demande de transmission de paquets si le dispositif de destination n'est pas capable d'échanger des paquets chiffrés ; et
une étape consistant à transmettre (S106) le second paquet chiffré à un dispositif servant de serveur proxy pour le dispositif de destination par P2P.

2. Procédé de traitement de communication selon la revendication 1, comprenant en outre :
une étape consistant à spécifier (S108) un dispositif comme étant le serveur proxy ; et
une étape consistant à transmettre (S112) une demande de validation d'une opération de proxy au dispositif spécifié.

3. Procédé de traitement de communication selon la revendication 2, comprenant en outre :
une étape consistant à acquérir (S1) une clé privée et une clé publique ;
une étape consistant à déterminer (S2) une adresse IP du dispositif lui-même sur la base d'une valeur de hachage calculée à partir de la clé publique en fonction d'une fonction de hachage ;
une étape consistant à acquérir (S4) un certificat numérique associé à la clé publique auprès d'une autorité de certification connectée à un réseau ; et
une étape consistant à transmettre (SQ10, SQ20, SQ30) la clé publique et le certificat numérique à un autre dispositif.

4. Procédé de traitement de communication selon la revendication 3, comprenant en outre :
une étape dans laquelle, lorsque la clé publique et un certificat numérique associé à la clé publique sont reçus en provenance d'un autre dispositif, la validité du certificat numérique est déterminée (SQ11, SQ14, SQ21, SQ24, SQ31, SQ34) ; et
une étape dans laquelle, lorsqu'il est déterminé que le certificat numérique est valide, une adresse IP de l'autre dispositif est déterminée sur la base d'une valeur de hachage calculée à partir de la clé publique en fonction d'une fonction de hachage (SQ12, SQ15, SQ22, SQ25, SQ32, SQ35).

5. Dispositif (100), comprenant :
une interface réseau (120) pour se connecter à un réseau ; et
une unité de commande (110) connectée à l'interface réseau,
dans lequel l'unité de commande est configurée pour être capable d'exécuter :
un traitement pour déterminer (S102) si un dispositif de destination est capable ou non d'échanger des paquets chiffrés en réponse à une demande de transmission de paquets sur la base d'une adresse IP du dispositif de destination ;
un traitement pour générer (S104) un premier paquet chiffré destiné au dispositif de destination en fonction de la demande de transmission de paquets si le dispositif de destination est capable d'échanger des paquets chiffrés ;
un traitement pour transmettre (S106) le premier paquet chiffré au dispositif de destination par P2P ;
un traitement pour générer (S114) un second paquet chiffré comportant un paquet destiné au dispositif de destination en fonction de la demande de transmission de paquets si le dispositif de destination n'est pas capable d'échanger des paquets chiffrés ; et
un traitement pour transmettre (S106) le second paquet chiffré à un dispositif servant de serveur proxy pour le dispositif de destination par P2P.

6. Programme de traitement de communication pour un ordinateur (100) ayant une interface réseau (120) pour se connecter à un réseau,
dans lequel, lorsque le programme de traitement de communication est exécuté par l'ordinateur, le programme de traitement de communication amène l'ordinateur à exécuter le procédé de traitement de communication selon l'une quelconque des revendications 1 à 4.
